# EUROPÄISCHE PATENTSCHRIFT

(11) **EP 0 510 123 B1**
(45) Veröffentlichungstag und Bekanntmachung des Hinweises auf die Patenterteilung: **23.08.1995**
(21) Anmeldenummer: 91905795.0
(22) Anmeldetag: 23.03.1991
(51) Int. Cl.: H02G 3/16

(54) **ELEKTRISCHES INSTALLATIONSSYSTEM**
ELECTRICAL HOUSE-WIRING SYSTEM
SYSTEME DE CABLAGE ELECTRIQUE DOMESTIQUE

(30) Priorität: 11.04.1990 DE 4011711
(43) Veröffentlichungstag der Anmeldung: 28.10.1992
(73) Patentinhaber: Freundner, Hasso, 58553 Halver (DE); Grabowski, Erika, 57462 Olpe (DE); Grabowski, Thomas, 57462 Olpe (DE); Grabowski, Michael, 57462 Olpe (DE)
(72) Erfinder: FREUNDNER, Hasso, D-5884 Halver (DE); GRABOWSKI, Walter, D-5960 Olpe-Biggesee (DE)
(74) Vertreter: Henfling, Fritz, Dipl.-Ing.
(86) Internationale Anmeldenummer: DE9100267
(87) Internationale Veröffentlichungsnummer: WO9115888

(56) Entgegenhaltungen:
- DE-A- 3 729 132
- DE-A- 3 813 903

## Beschreibung

Die Erfindung betrifft ein elektrisches Installationssystem zur zeitsparenden Durchverdrahtung bei elektrischen Kombinationen von Installationsdosen wie z.B. Schalterdosen, Abzweigschalterdosen und dergleichen. Darüber hinaus soll die Anschlußmöglichkeit wesentlich vereinfacht werden, d.h. es wird nur noch gesteckt und nicht mehr manuell verdrahtet.

Bisher gestaltete sich das Herstellen einer Durchverdrahtung innerhalb einer Dosenkombination äußerst arbeitsaufwendig und zeitraubend. Die herkömmlichen Installationsdosen wie Schalterdosen, Abzweigdosen und dergleichen sind so gestaltet, daß sie ein Installationsgerät wie z.B. Schalter, Dimmer, Steckvorrichtung usw. aufnehmen können. Diese Installationsgeräte müssen mit den in der Dose ankommenden verschiedenartigen Leitungen verbunden werden. Benötigt man nun mehrere Installationsgeräte an einer Stelle, so wird die entsprechence Anzahl von Installationsdosen zu einer sogenannten Kombination zusammengefügt. Hierbei sind üblicherweise die Installationsdosen zur Aufnahme von Installationsgeräten bereits vom Hersteller mit Kupplungselementen versehen, so daß die mechanische Kombination durch Zusammenfügen von Einzeldosen zu einer Dosenkombination auf der Baustelle relativ schnell erfolgen kann. Dabei ist jedoch die Herstellung der Durchverdrahtung von Dose zu Dose innerhalb einer Dosenkombination sehr zeitaufwendig und arbeitsintensiv. Zur Durchverdrahtung von einer Dose zur anderen müssen mindestens drei Leitungsadern in unterschiedlichen Längen mit unterschiedlicher Farbkennzeichnung entsprechend der elektrischen Funktion der einzelnen Adern auf der Baustelle hergerichtet werden. Zur Herrichtung ist die jeweilige Länge festzulegen, die von Fall zu Fall unterschiedlich ist, und die Aderenden dieser Leitungen sind abzuisolieren. Nach der vorbereitenden Arbeit und Durchführung dieser Leitungen von Dose zu Dose werden zusammengehörige Aderenden mittels Verbindungsklemmen kontaktiert. Diese Kontaktierung kann nur außerhalb der Installationsdose durchgeführt werden. Zusätzlich sind noch Leitungsenden zum Anschluß des elektrischen Installationsgerätes festzulegen, beidseitig abzuisolieren und mit Klemmen zu verbinden. Danach ist das gesamte Leitungsgut mit angeschlossenen Verbindungsklemmen in eine Installationsdose zurückzuführen und mit besonderer Sorgfalt dort zu verstauen, damit das danach einzubauende elektrische Installationsgerät nicht durch das vorher eingelegte Leitungsgut und die zugehörigen Klemmen behindert wird. Berücksichtigt man, daß Kombinationen bis zu max. fünf Installationsdosen in einer Zeile zulässig sind, so wird deutlich, wieviel Zeit- und Arbeitsaufwand zur Herstellung einer elektrischen Durcnverdrahtung bei der bisherigen Installationsmethode auf der Baustelle notwendig ist.

Aus der DE-OS 37 29 132 ist eine elektrische Installationseinrichtung für die Hausinstallation mit einer Universaldose und Anschlußelemente und mehreren Funktionselementen bekannt geworden. Hierbei handelt es sich um eine Universaldose, bei der das Abrufen einer bestimmten Funktion keinen installationstechnischen Aufwand erfordert. Es sind einem Anschlußelement unterschiedliche Funktionen zugeordnet, die durch eine bestimmte Funktion aktiviert werden können. Dabei werden die elektrischen Kontakte zwischen den Leitungen und dem Funktionselement mittels Steckverbindungen, welche Kontaktstücke enthalten, aktiviert.

Aus der DE-A- 38 13 903 ist ein System zur Installation von in Reihe angeordneten elektrischen Geräten, wie Schalter, Steckdosen und dergleichen bekannt geworden.

Ein weiteres elektrisches Installationssystem offenbart die DE-OS 23 38 877. Hier sind in einem Installationskanal Leiter in ihrer Lage zu einander fixiert und Kontaktplatten vorgesehen, die die Übergänge durch Verbindungsplatten mit anderen Installationskanälen herstellen. Das besondere ist darin zu sehen, daß diese Kontaktplatten so ausgestaltet sind, daß sie elektrische Betriebsmittel wie z.B. Schalter, Steckdosen und Geräteanschlußdosen aufnehmen können.

Ein Stecksystem für elektrische Installationen beschreibt die DE-OS 33 36 817, welches für elektrische Installationen des 220 V Wechselstromnetzes verwendet werden Kann. Durch dieses System sollen die Installationsarbeiten wesentlich reduziert und Fehlverdrahtungen einzelner Stromkreise verhindert werden. Das Ziel wird dadurch erreicht, daß mit fertig verdrahteten Verteilermodulen Steckmodule verbunden werden, die auf drei Seiten Steckbuchsenreihen aufweisen und auf einer weiteren Seite eine Steckerreihe aufweisen, die mit einer Steckbuchsenreihe eines Zuleitungsmoduls verbindbar ist.

In der DE/EP 0 232 140 ist ein elektrisches Niederspannungsverteilungssystem gezeigt, welches mit einer Verteilerschiene und verschiedenen Stöpseln zwischen den einzelnen Elektroden geschaltet wird.

Ausgehend vom Stand der Technik liegt der Erfindung die Aufgabe zugrunde, bei einem Installationssystem der eingangs umrissenen Gattung die Verbindung fluchtender Leiter in aufeinanderfolgenden Installationsdosen, insbesondere bei dem Anschluß an die Speiseleitung rationeller zu gestalten. Es soll die aufwendige Verdrahtung innerhalb der Installationsdosen entfallen, wobei jedoch darauf zu achten ist, daß die Installationsdosen in den geometrischen Abmessungen, die relevant sind zur Aufnahme von Geräten, nicht verändert werden.

Diese Aufgabe wird erfindungsgemäß durch das elektrische Installationssystem mit den Merkmalen des Anspruchs 1 gelöst.

Erfindungsgemäß ist im unteren Bereich der Dose mindestens ein Steckblock vorhanden, welcher den Anschluß von mehreren Leitungen zuläßt. Wird nunmehr bei einer Dosenkombination in jeder Installationsdose dieser Kombination ein Steckblock eingelegt und so lagefixiert, daß die Abstände der Steckblöcke von einander immer gleich sind, was quasi eine Linie darstellt, so wird durch einfaches Einstecken einer sogenannten Kombinationsbrücke ein schnelles Durchverbinden innerhalb dieser kombination erreicht. Dabei wird die Kombinationsbrücke vorzugsweise dreipolig ausgeführt, um die elektrischen Verbindungen der Leitungen für die Phase, den Mittelpunktsleiter und den Schutzleiter herzustellen. Die zur Anmeldung kommenden Steckblöcke besitzen in der Regel je Pol vier Anschlußmöglichkeiten. Der erste Anschluß wird belegt durch die Kombinationsbrücke als Zuleitung, der vierte Anschluß durch eine andere Kombinationsbrücke als Weiterleitung zur nächsten Dose. Zwei Anschlüsse je Pol sind zunächst noch frei. Einer dieser freien Anschlüsse wird dafür benötigt, um ein elektrisches Installationsgerät anzuschließen, so daß der letzte freie Anschluß z.B. als Zuleitung zu einer Leuchte benutzt werden kann. Unter bestimmten Voraussetzungen reichen jedoch diese vier Anschlußmöglichkeiten je Pol nicht aus, nämlich dann, wenn noch weitere Ableitungen benötigt werden, die z.B. zu anderen, außerhalb einer Kombination befindlichen Installationsdosen führen sollen und dort als Zuleitung diesen. Hier wird Abhilfe durch eine Polbrücke geschaffen, welche durch Einsteckung in dreipoliger Ausführung neue Steckmöglichkeiten in einem weiteren Steckblock ermöglicht. Auch dieser weitere Steckblock, der sich neben dem ersten befindet, ist mit je vier Anschlußmöglichkeiten eines Potentiales ausgerüstet. Es werden so durch Setzen einer Polbrücke zusätzliche Anschlußmöglichkeiten für zwei weitere Ableitungen geschaffen. Die durch das Setzen der Polbrücke von vier auf acht Anschlußmöglichkeiten geschaffene Erweiterung kann z.B. wie folgt belegt werden: 1. Einspeisung, 2. Polbrücke, 3. Installationsgerät, 4. Weiterleitung zur nächsten Dose mittels Kombinationsbrücke innerhalb der Kombination, 5. Zuleitung zur Leuchte, 6. Polbrücke, 7. Weiterleitung zu einer externen Installationsdose, 8. Weiterleitung zu einer anderen externen Installationsdose. Durch diese Installationstechnik ist ein Weg zur elektrischen Durchverdrahtung innerhalb einer Kombination geschaffen worden, die den Installationsaufwand auf ein Minimum begrenzt. Die nach der Erfindung vorgesehene, insbesondere dem Anschluß fluchtender Leiterabschnitte in aufeinanderfolgenden Installationsdosen an die Speiseleitung vorbeiführende Brücke, ermöglicht in wünschenswerter Weise eine schnelle elektrische Zusammenfassung der an die Speiseleitung zu legenden Leiterabschnitte in den aufeinanderfolgenden Installationsdosen. Bei auf die Abmessung der Installationsdosen und die Lage der endseitigen Kontakte der Leiterabschnitte in den Dosen ausgelegten Brücken ergibt sich dann auch ein problemloses Ansetzen der Brücke. In Ausgestaltung der Erfindung ist eine weitere, die Leiterabschnitte einer Dose querende Brücke vorgesehen, in die die Verbinder für zunächst unbelegte Leiterabschnitte in der Dose mit angrenzenden, an der Speiseleitung liegenden Leiterabschnitten eingebettet sind. Diese Brücke läßt sich bei entsprechender Auslegung leicht und problemlos einsetzen. Diese Art des Systemes ist etwas aufwendiger und damit auch komfortabler, was natürlich einen größeren Platzbedarf ausmacht. Bei dieser Version sind nicht nur drei nebeneinander liegende Leiter vorhanden, sondern sieben. Von diesen sieben Leitern werden in der Regel allerdings nur drei benutzt, und durch eine sogenannte Polbrücke kann der neben dem durchgeführten Leiter unbenutzte Leiter aktiviert werden. Dieses hat zur Folge, daß die Verdrahtung und der Anschluß der Bediengeräte innerhalb des Klemmblockes vorgenommen wird.

Aufgrund des bekannten Standes der Technik, kann man bei dem erfindungsgemäßen Gegenstand quasi von einer dritten Generation von Installationsdosen sprechen. Bei der ersten Generation wurde die Stromverteilung in Abzweigdosen durchgeführt, was eine Leitungsverbindung mit in der Regel losen Verbindungsklemmen darstellte. Die Nachteile liegen auf der Hand, es müssen zusätzliche Abzweigdosen gesetzt werden, und ein zusätzlicher Arbeitsaufwand besteht darin. die Leitungsverbindungen herzustellen. Die Verdrahtung der Klemmen erfolgt in der Dose, hierdurch waren lange Leitungsenden bedingt, und anschließend mußte das gesamte Leitungsgut mit den Verbindungklemmen in die Abzweigdose eingelegt werden. Ein großer Arbeitsaufwand durch Zurichten der Leitungsenden fiel an, und eine Übersicht innerhalb der Verdrahtung war nicht gegeben.

Bei der zweiten Generation wurde die Stromverteilung in sogenannten Abzweigschalterdosen vorgenommen. Auch hier wurden die Leitungsverbindungen mit losen Verbindungsklemmen hergestellt. Dieses hatte zur Folge, daß auch hier lange Leitungsenden vorhanden waren, und das gesamte Leitungsgut mit den Verbindungsklemmen in die Abzweigschalterdose eingelegt werden mußte.

Die nun neue und dritte Generation der Stromverteilung erfolgt in den erfindungsgemäßen Schalterdosen. Die Leitungsverbindung geschieht durch fixierte Steckblöcke, in welche durch einfaches Einstecken der Leitungsenden der Kontakt hergestellt wird. Die Vorteile sind im einzelnen:

Es gibt keine Abzweigdosen mehr, es werden keine Abzweigschalterdosen mehr verwendet und lose Klemmverbindungen sind auch nicht vorhanden. Eine einheitliche kurze Leitungslänge der Zu- und Ableitungen kann realisiert werden. Für die anzuschließenden Geräte kann eine kurze Normlänge, welche vorkonfektioniert werden kann, geschaffen werden. Es entsteht kein Arbeitsaufwand zum Ordnen, Zusammenführen und elektrischen Kontaktieren von Adern unterschiedlicher Leitungen mehr. Ein Verdrahten innerhalb der Dose entfällt, was den Arbeitsaufwand durch Einlegen von Klemmen oder Herrichten von Leitungsenden und ganz besonders die Herstellung der elektrischen Durchverdrahtung innerhalb einer Kombination verkürzt. Ein besonderer Vorteil liegt auch darin, daß keine Kontaktierung elektrischer Verbindungen von Installationsdose zu Installationsdose über eingebaute Geräte durchgeführt wird. Eine universelle Anwendbarkeit des erfindungsgemäßen Installationssystemes wird auch dadurch gewährleistet, daß insbesondere für die Installationstechniken Unterputz, Hohlwand, Betonbau, Imputz, Installationskanal, Aufputz sowie bei Sonderausführungen der Elektroinstallation wie z.B. Deckenanschlußsysteme oder dergleichen eine Anwendung gegeben ist. Die anschlußfertige Vorverdrahtung der Geräte kann durch entsprechende Normlängen in der Werkstatt oder beim Hersteller direkt erfolgen. Somit wird die Installation innerhalb einer Installationsdose übersichtlich und kann durch eine spätere Erweiterung auch schnell umgeändert werden.

Das neue elektrische Installationssytem kann mit Einfachdosen durchgeführt werden. Kombinationen werden in bekannter Weise durch Aneinanderreihen von Einzeldosen in beliebiger Anzahl hergestellt. Beim Aneinanderreihen der Einzeldosen wird die Stirnwand an der Kupplungsseite zum Einstecken der Kombinationsbrücken entfernt. Im Boden der Dose befindet sich eine Halterung zur Aufnahme des Steckblockes. Dieser Steckblock kann vorzugsweise drei- oder siebenpolig sein. Bei der dreipoligen Ausführung handelt es sich um einen Pol für die Phase, einen für den Schutzleiter und einen für den Mittelpunktsleiter. In dieser Version wird das Verschalten der Geräte nicht innernalb der Dose vorgenommen, sondern am Gerät selbst. Dieses ist auch dadurch möglich geworden, daß heute an den Geräten wie Schaltern usw. Doppelkontakte zum Anschluß von Leitungen vorhanden sind. Wird jedoch ein siebenpoliger Steckblock verwendet, so besitzen sechs Pole vier Anschlußmöglichkeiten für Leitungen. Der siebente Pol besitzt zwei Anschlüsse und dient als Hilfsleitung. Innerhalb des Steckblockes sind sämtliche Anschlüsse je Pol durch Installationsleisten elektrische mit einander verbunden. Drei dieser sieben Pole sind funktionsmäßig für die Phase, den Nulleiter und den Schutzleiter fest vorgesehen. Durch einfaches Einstecken vorgefertigter mehrpoliger, insbesondere dreipoliger Kombinationsbrücken für die Phase, den Mittelpunktsleiter und den Schutzleiter erfolgt die elektrische Einspeisung von Installationsdosen innerhalb von Kombinationen. Sollte bei speziellen Schaltungen die Anzahl der Anschlußmöglichkeiten eines Poles nicht ausreichen, so werden die Anschlußmöglichkeiten je Pol durch Einstecken einer sogenannten Polbrücke von vier auf acht Anschlußmöglichkeiten erweitert. Beim Verdoppeln der Anschlußmöglichkeiten je Pol durch Einstecken von Polbrücken wird entsprechend VDE 0606 die Anzahl der in einer Installationsdose vorhandenen Anzahl von Verbindungsklemmen halbiert. Mit Hilfe des lagefixierten Steckblockes sind sämtliche bekannten Arten von Schaltungen einfacher anschließbar als bisher üblich, selbst die schaltungstechnisch aufwendige Serien/ Wechselschaltung. Der Steckblock für das Installationssystem ersetzt somit sämtliche sonst üblichen losen Verbindungsklemmen innerhalb einer Kombination. Die elektrische Durchverdrahtung von Installationsdose zu Installationsdose innernalb einer Kombination erfolgt durch einfaches Einstecken der Kombinationsbrücke, wobei die Vergrößerung (Verdoppelung) der Anschlußmöglichkeiten je Pol durch einfaches Einstecken einer Polbrücke innerhalb der Dose realisiert werden kann.

Insgesamt ermöglicht die erfindungsgemäße Verbindungstechnik die denkbar schnellste Herstellung der elektrischen Verbindung zwischen Leitern in aufeinanderfolgendeen Installationsdosen in Verbindung mit der Möglichkeit der Ausweitung der Anschlußmöglichkeiten.

Die Erfindung wird anhand einiger schematisch dargestellter Ausführungsbeispiele näher erläutert. Es zeigt:
- Figur 1:: zwei Installationsdosen mit einem Dreiersteckblock und Kombinationsbrücke,
- Figur 2:: Steckblock mit loser Abdeckung
- Figur 3:: Steckblock von oben gesehen
- Figur 4:: Installationsdose im Schnitt in der Seitenansicht
- Figur 5:: zwei Installationsdosen in der Draufsicht mit Dreiersteckblock
- Figur 6:: zwei Installationsdosen in der Draufsicht mit Kombinationsbrücke und Polbrücke

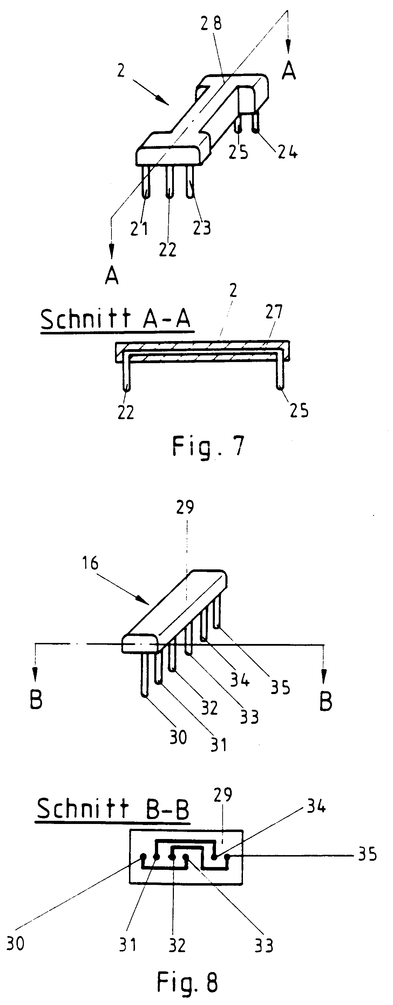

- Figur 7:: Kombinationsbrücke
- Figur 8:: Polbrücke
- Figur 9:: Schaltschema mit einem dreipoligen Steckblock
- Figur 10:: Installationsdosen in der Draufsicht mit einem Sechsersteckblock und Kombinationsbrücke
- Figur 11:: trennbare Polbrücke im Schnitt
- Figur 12:: Kombinationsbrücke im Schnitt

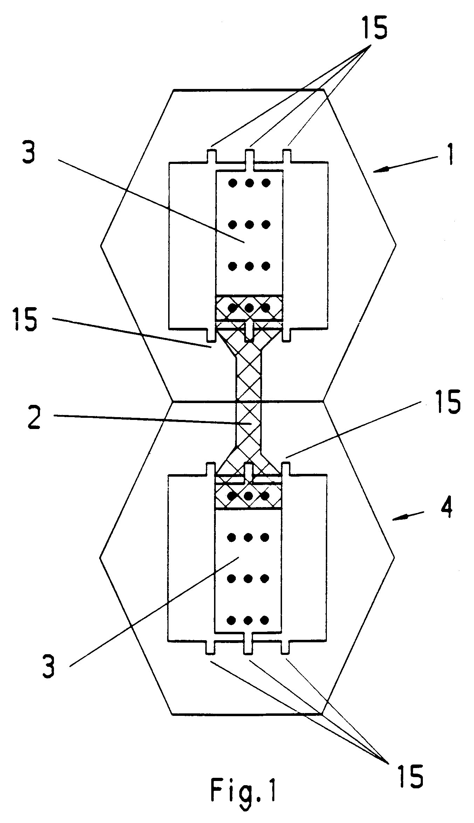

In der Figur 1 ist in der Draufsicht eine Kombination bestehend aus den Installationsdosen (1) und (4) dargestellt. Im Grund der Installationsdosen (1) und (4) befindet sich ein Aufnahmeraum (5) für den Steckblock (3). Dieser Steckblock (3) kann innerhalb der Installationsdosen verschiedene Positionen einnehmen, vorzugsweise drei. Innerhalb dieser drei Positionen ist der Steckblock (3) in seiner Lage fixiert. Die Fixierung der Lage geschieht durch einen an dem Steckblock (3) angeformten Vorsprung (9), welcher in eine Aussparung (15) formschlüssig eingreift. Der Raum (5) für den Steckblock (3) ist so bemessen, daß der Steckblock entweder auf der linken Seite in der Mitte oder rechts plaziert werden kann. Wird er auf der linken Seite eingesteckt, so kann auf der rechten Seite ein zweiter Steckblock (3) eingeführt werden. Durch die Lagefixierung des Steckblockes (3) wird gleichzeitig auch ein definierter Abstand zum Installationsdosenende festgelegt. Bei einer Kombination zweier Installationsdosen ergibt sich somit ein festes Maß zwischen den Installationsdosen (1) und (4), welches durch eine Kombinationsbrücke (2), die in zwei unter einanderliegende in der Linie fortlaufende Steckblöcke (3) eingreift, überbrückt werden kann.

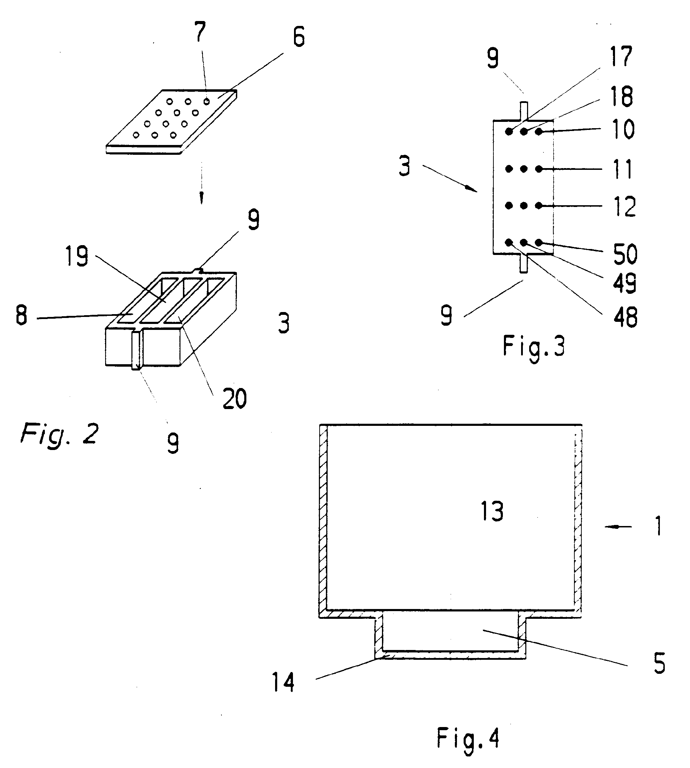

Der in Figur 2 dargestellte Steckblock (3) hat in drei nebeneinander liegenden von einander isolierten Räumen eingebettete Leiter (8), (19) und (20). Diese Leiter sind so gestaltet, daß durch Einstecken eines Schaltdrahtes durch die Leitungsdurchführung (7) der Abdeckung (6) ein Kontakt mit der darunter befindlichen Leitung sicher hergestellt wird. In der Abdeckung (6) befinden sich für jeden Leiter Durchbrüche, welche unter einander liegen. Vorzugsweise reichen für einen Leiter vier Anschlußmöglichkeiten aus. Fängt man mit der ersten Installationsdose an, so wird über die Punkte (17), (18) und (10) die Einspeisung des Steckblockes (3) vorgenommen. Hierfür werden die ankommenden Leiter abisoliert und in die vorbereiteten Leitungseinführungen gesteckt. Durch diese Maßnahme ist der Steckblock (3) mit dem Spannungsnetz verbunden. Soll die Installationsdose mit einer zweiten verbunden werden, so muß der aufgelegte Netzanschluß durch eine Kombinationsbrücke (2) mit der nachfolgenden Installationsdose verbunden werden. Dieses geschieht dadurch, daß in die Brückenpunkte (48), (49) und (50) die Kombinationsbrücke (2) mit ihren Stiften (21), (22) und (23) eingesteckt wird. Gleichzeitig werden in der nachfolgenden Installationsdose (4) über die Kontaktstifte (24), (25) und (26) die Kontakte mit dem Steckblock (3) hergestellt. Innerhalb des Steckblockes (3) befinden sich durchgehende Leiterbahnen (27) für jedes Potential.

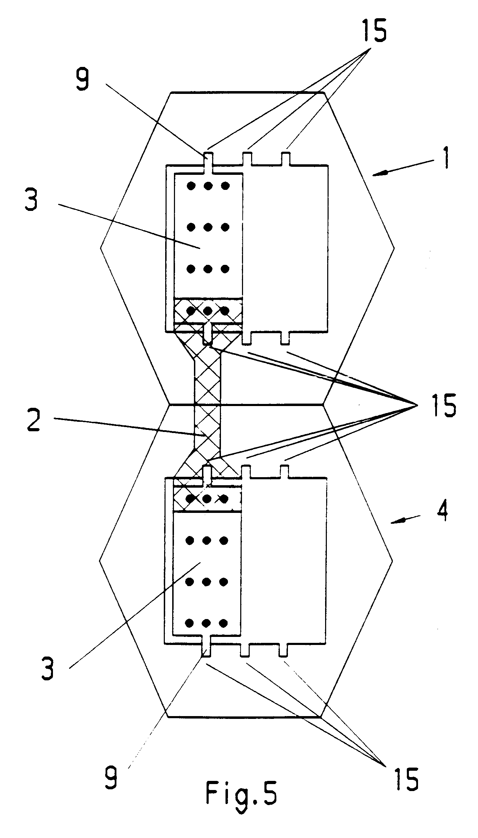

Das in der Figur 5 dargestellte Ausführungsbeispiel zeigt eine Kombination zweier Installationsdosen (1) und (4), bei denen die Steckblöcke (3) auf der linken Seite innerhalb des Raumes (5) der Installationsdosen eingesetzt worden sind. Die Verbindung in den beiden Installationsdosen (1) und (4) geschieht über die Kombinationsbrücke (2). Der Anschluß von Geräten ist in diesem Ausführungsbeispiel nicht näher dargestellt. Sollte es notwendig sein, daß die vorhandenen Kontaktmöglichkeiten nicht ausreichen, so kann auf einem zweiten Platz innerhalb der Installationsdose ein zweiter Steckblock (3) eingesetzt werden. Dieser Steckblock ist identisch mit dem bereits für die Durchschaltung der Netzleitung eingesetzten Steckblock.

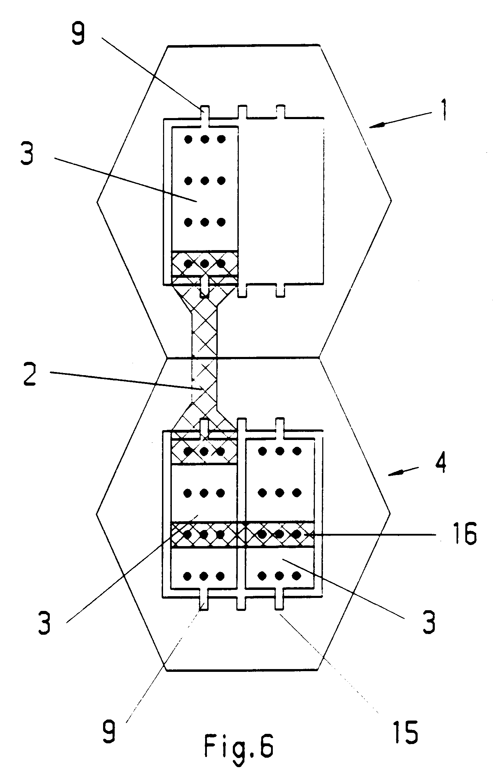

Die Figur 6 zeigt ein solches Ausführungsbeispiel, wobei der zweite Steckblock (3) seine Verbindung mit dem ersten Steckblock (3) dadurch erhält, daß eine Polbrücke (16) eingesetzt wird. Die Polbrücke (16) ist so gestaltet, daß drei durchgeführte Leiter auf den daneben befindlichen Steckblock (3) sicher überführt werden.

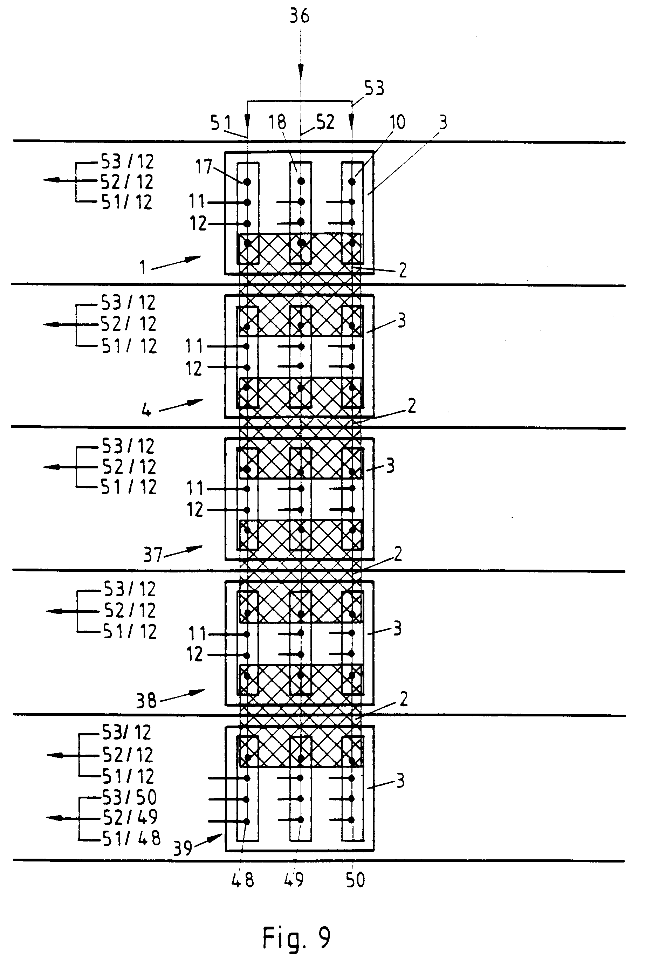

Bei dem in der Figur 9 dargestellten Ausführungsbeispiel, bei dem eine 5fach-Kombination gezeigt wird, wird klar gemacht, daß mit Hilfe des steckbaren Installationssystemes sämtliche herkömmlichen Schaltungsarten realisiert werden können. Vorteilhaft für diese Installationsart ist jedoch, daß an den Schaltern bzw. Steckdosen jeweils zwei Anschlußmöglichkeiten für einen Pol vorhanden sind. Dadurch reduziert sich der Anschluß innerhalb des Stecksystemes und kann bereits durch vorkonfektionierte Leitungen an dem Gerät vorgenommen werden. Über die Zuleitung (36) werden die Installationsdosen durch die Phase (51), den Schutzleiter (52) und den Mittelpunktsleiter (53) an das Netz angeschlossen. Bei der Installationsdose (1) handelt es sich um einen Serienschalter plus eine Weiterleitung. Bei dem Kabel 1 wird der Schutzleiter (52) über die Steckverbindung (52/11) mit dem Steckblock (3) verbunden. Ebenfalls wird der Mittelpunktsleiter (53/11) mit dem Endverbraucher verbunden. Direkt zum Schalter wird die Phase (51/11) geführt. Die weitere Verschaltung wird an dem Serienschalter vorgenommen. Eine Weiterleitung ist aus dieser Dose auch noch möglich; dieses geschieht über die Anschlüsse (53/12), (52/12) und (51/12) über ein separates Kabel. Gleichzeitig aber wird über die Kombinationsbrücke (2) die Zuleitung auf die folgende Installationsdose (4) der Kombination weitergeleitet. Bei diesem Beispiel soll es sich um einen Ausschalter handeln, der dadurch realisiert wird, daß über den Anschluß (51/11) die Phase an den Ausschalter gelegt wird. Der Mittelpunktsleiter und der Schutzleiter werden direkt zu dem Endverbraucher geführt. Auch hier ist wiederum eine Weiterleitung über die Kontakte (51/12), (52/12) und (53/12) realisiert worden. Wiederum wird über die Kombinationsbrücke (2) die Einspeisung (36) auf eine nachfolgend angeordnete Installationsdose (37) weitergeleitet. Bei der Installationsdose (37) handelt es sich beispielsweise wieder um eine Serienschaltung plus Weiterleitung. Der Kontakt zur nachfolgenden Installationsdose (38) wird wieder über die Kombinationsbrücke (2) sichergestellt. Bei der Installationsdose (38) handelt es sich um eine Serien/Wechselschaltung plus einer Weiterleitung. Auch diese Schaltungsart ist mit dem vorliegenden System zu realisieren, weil an den heute verwendeten Geräten Doppelkontakte vorhanden sind. Die letzte Installationsdose (3) der vorbeschriebenen Kombination wird wiederum über die Kombinationsbrücke (2) mit der vorhergehenden Installationsdose (38) elektrisch verbunden. Hier an der letzten Dose wird eine Steckdose angeschlossen, und es werden zwei Weiterleitungen durchgeführt, die z.B. zu einem weiteren Installationssystem mit entsprechenden Dosen führen kann.

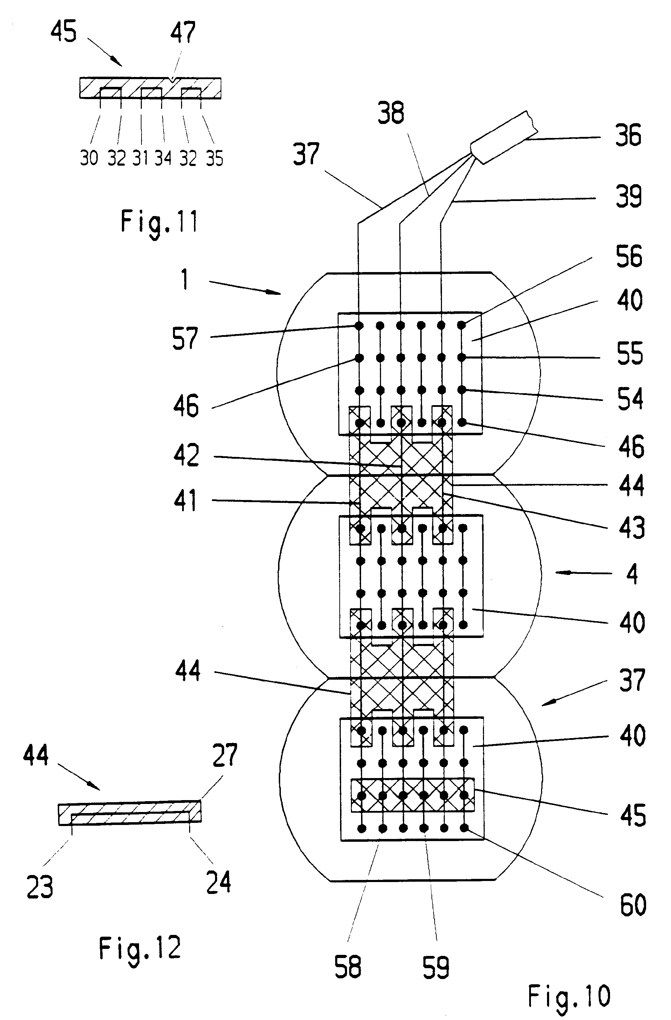

Bei dem in der Figur 10 dargestellten Ausführungsbeispiel handelt es sich um eine Ausführungsform der vorgenannten Erfindung, bei der der Steckblock (3) einen Leiterbahnabschnitt (40) mit sechs parallel verlaufenden Leiterbahnen aufweist. Hier wird mit den Installationsdosen (1), (4) und (37) wieder andeutungsweise ein Installationssystem dargestellt. Am Boden der Installationsdosen befinden sich die Leiterbahnabschnitte (40) mit jeweils sechs im Abstand von einander nebeneinander verlaufenden Leiterbahnen. Jeder Leiter ist über seine Länge in Abständen, wie auch bereits bei dem dreipoligen System vorbeschrieben, mit Steckkontakten versehen. Im dargestellten Fall sind es vier Steckkontakte (46), (54), (55) und (56). An dem Leiterbahnabschnitt (40) der Installationsdose (1) ist die Speiseleitung (36) mit ihren Adern (37), (38) und (39) angeschlossen, und zwar über die endseitigen Steckkontakte (57) der Leiter (37), (38) und (39). Der Anschluß erfolgt auch hier in bekannter Weise durch Einfügen der abisolierten, durch die Dosenwandung eingeführten Enden der Adern (37), (38) und (39) in die Steckkontakte der entsprechenden Leiterbahnabschnitte (40).

Für die Verbindung fluchtender Leiter in aufeinanderfolgendeen Installationsdosen, z.B. (4) und (37), sind Kombinationsbrücken (44) mit darin eingebetteten Leitern (27) vorgesehen, deren in den Endbereichen der Kombinationsbrücke (44) aus der Brücke herausragende Steckkontakte (23) und (24) sich in an die Leiter (37), (38) und (39) der Leiterbahnabschnitte (40) in den aufeinanderfolgenaden Installationsdosen (1) und (4) angesetzten Zustand der Brücke in die endseitigen Steckkontakte dieser Leiter einfügen.

Durch die in der Installationsdose (37) eingesetzte Polbrücke (45) erfolgt der Anschluß durch die Leiter (58), (59) und (60) dieser Dose an die Speiseleitung (36) über die in diese Brücke eingebetteten Verbindungen. Ist nur der zusätzliche Anschluß etwa zweier Leiter beabsichtigt, so wird der Bereich der Polbrücke (45) an der Einkerbung (47) abgebrochen.

Zumindest zwei Steckkontakte in jeder Dose jedes Leiters bleiben für den Anschluß der in die Dose einzufügenden Installationsgeräte und dann auch noch für den Anschluß von Zweigleitungen verfügbar. Um falsche Zusammenfassungen von Leitern auszuschließen, werden zweckmäßigerweise Einbauorientierungen an den Leiterbahnabschnitten und/oder den Kombinationsbrücken bzw. Polbrücken vorgesehen.

Bei dem vorbeschriebenen Steckblock, der aus sechs oder auch hilfsweise aus sieben Leiterbahnabschnitten besteht, kann ein Verschalten der einzubringenden Geräte innerhalb des Steckblockes vorgenommen werden.

Durch den erfindungsgemäßen Gegenstand können in jeder Installationsdose einer Kombination direkt Installationsgeräte angeschlossen werden. Darüber hinaus ist es jedoch auch möglich, durch Weiterleitung weitere Installationsdosen zu versorgen. Zur Einspeisung der einzelnen Installationsdosen innerhalb einer Kombination ist deshalb keine zusätzliche Verdrahtungsarbeit mehr auf der Baustelle zu leisten. Die bisher gebräuchlichen, in der Regel lose eingelegten Verbindungsklemmen, werden damit nicht mehr benötigt. Die vorbezeichneten Installationsdosen sind nicht nur Gerätedosen oder Geräteverbindungsdosen, sondern sie können auch bei Bedarf als reine Verbindungsdosen eingesetzt werden.

### Bezugszeichenverzeichnis

- 1: Installationsdose
- 2: Kombinationsbrücke
- 3: Steckblock
- 4: Installationsdose
- 5: Raum für Steckblock
- 6: Abdeckung
- 7: Leitungseinführung
- 8: Leiterbett
- 9: Vorsprung
- 10: Einspeisung
- 11: Ableitung
- 12: Geräteanschluß
- 13: Raum für Schalter
- 14: Boden
- 15: Aussparung
- 16: Polbrücke
- 17: Einspeisung
- 18: Einspeisung
- 19: Leiterbett
- 20: Leiterbett
- 21: Kontaktstift
- 22: Kontaktstift
- 23: Kontaktstift
- 24: Kontaktstift
- 25: Kontaktstift
- 26: Kontaktstift
- 27: Leiterbahn
- 28: Isolierung
- 29: Isolierung
- 30: Kontaktstift
- 31: Kontaktstift
- 32: Kontaktstift
- 33: Kontaktstift
- 34: Kontaktstift
- 35: Kontaktstift
- 36: Einspeisung
- 37: Installationsdose
- 38: Installationsdose
- 39: Installationsdose
- 40: Leiterbahnabschnitt
- 41: Leiterbahn
- 42: Leiterbahn
- 43: Leiterbahn
- 44: Kombinationsbrücke
- 45: Polbrücke
- 46: Steckkontakt
- 47: Einkerbung
- 48: Brückenpunkte
- 49: Brückenpunkte
- 50: Brückenpunkte
- 51: Phase
- 52: Schutzleiter
- 53: Mittelpunktsleiter
- 54: Steckkontakt
- 55: Steckkontakt
- 56: Steckkontakt
- 57: Steckkontakt
- 58: Leiter
- 59: Leiter
- 60: Leiter

## Patentansprüche

1. Elektrisches Installationssystem, bestehend aus aneinanderreihbaren Installationsdosen (1,4,37,38,39) zur Aufnahme von Installationsgeräten, wie Schalter, Steckdosen und dergleichen, mit einer Mehrzahl von im Grund der Installationsdosen (1,4,37,38,39) im Abstand von einander nebeneinander verlaufenden über ihre Länge in Abständen eine Mehrzahl von Steckkontakten (54-57) aufweisenden Leiter, die in einem Isolierstoffblock eingebettet sind, wobei an die eingangsseitigen Kontakte mindestens einer der endseitigen Installationsdosen (1,4,37,38,39) des Systems die Adern der durch einen Durchgang in der Dosenwandung geführten Speiseleitung und/oder geschalteten Leitungen gelegt werden und an die aufeinanderfolgenden Installationsdosen (1,4,37,38,39) angrenzende Kontakte durch Durchgänge in den Dosenwandungen geführte Verbindungen für fluchtende Leiter in aufeinanderfolgenden Installationsdosen (1,4,37,38,39) und die verbleibenden Kontakte für den Anschluß der Installationsgeräte und Zweigleitungen zur Verfügung stehen, dadurch gekennzeichnet, daß im unteren Bereich der Installationsdose (1), (4), (37), (38) und (39) mindestens eine Aufnahme (5) für einen in seiner Lage fixierten auswechselbaren Steckblock (3) oder Leiterbahnabschnitt (40) mit mehreren Anschlußmöglichkeiten je Pol vorhanden ist und die Verbindungen zumindest für die fluchtenden, an die Speiseleitung zu legenden Leiter in aufeinanderfolgenden Installationsdosen im sich durch die Dosenwandungen aufeinanderfolgender Installationsdosen erstreckenden Brücken eingebettet sind, aus denen endseitig in Richtung auf die Leiter orientierte, sich in die endseitigen Steckkontakte der Leiter einfügende, von den Verbindungen ausgehende Stecker vorspringen.

2. Elektrisches Installationssystem nach Anspruch 1, dadurch gekennzeichnet, daß die Verbindungen zwischen den einzelnen Installationsdosen (1), (4), (37), (38) und (39) vorgefertigte Kombinationsbrücken (2) sind.

3. Elektrisches Installationssystem nach Anspruch 1 und 2, dadurch gekennzeichnet, daß die in den Kombinationsbrücken (2) eingebetteten Verbindungen (27) Leiter sind, deren abgebogene, aus der Kombinationsbrücke (2) vorspringenden Enden die Stecker (21), (22), (23), (24), (25), (26), (30), (31), (32), (33), (34) und (35) bilden.

4. Elektrisches Installationssystem nach den Ansprüchen 1 bis 3, dadurch gekennzeichnet, daß der Steckblock (3) mit drei elektrisch von einander isolierten Leiterbahnen (27) ausgestattet ist, welche parallel verlaufen und Anschlußmöglichkeiten durch eine Steckverbindung haben.

5. Elektrisches Installationssystem nach den Ansprüchen 1 bis 4, dadurch gekennzeichnet, daß die Abdeckung (6) des Steckblockes (3) für jeden Leiter zumindest drei Leitungseinführungen (7) aufweist.

6. Elektrisches Installationssystem nach einem der vorhergehenden Ansprüche, dadurch gekennzeichnet, daß mindestens eine lagefixierte Plazierung des Steckblockes (3) in der Installationsdose (1), (4), (37), (38) und (39) vorhanden ist.

7. Elektrisches Installationssystem nach einem der vorhergehenden Ansprüche, dadurch gekennzeichnet, daß über Polbrücken (16) und (45) zwei Steckblöcke (3) oder Leiterbannabschnitte (40) miteinander verbunden werden.

8. Elektrisches Installationssystem nach Anpsruch 1, dadurch gekennzeichnet, daß der Steckblock (2) oder der Leiterbahnabschnitt (40) mit mehr als drei elektrisch von einander isolierten Leiterbahnen (27) ausgestattet ist, welche parallel verlaufen.

9. Elektrisches Installationssystem nach Anspruch 1 oder 8, dadurch gekennzeichnet, daß eine Kombinationsbrücke (44) mit einer jeweils die an die an der Speiseleitung liegenden Leiter angrenzenden Leiter aussparenden Verbindungsanordnung.

10. Elektrisches Installationssystem nach Anspruch 3, dadurch gekennzeichnet, daß eine zweite, die Leiter einer Installationsdose (1), (4), (37), (38) und (39) querende Polbrücke (45), mit darin eingebetteten Kontaktbügeln (30), (31), (32), (33), (34) und (35) zum Kurzschließen der an der Speiseleitung liegenden Leiter (37), (38) und (39) mit den benachbarten unbelegten Leitern.

11. Elektrisches Installationssystem nach Anspruch 10, dadurch gekennzeichnet, daß die Polbrücke (45) mit Einkerbungen (47) als Sollbruchstellen versehen ist.

12. Elektrisches Installationssystem nach einem oder mehreren der vorhergehenden Ansprüche, dadurch gekennzeichnet, daß die Installationsdose ohne Geräteanschluß als Abzweigdose eingesetzt wird.

## Claims

1. An electric installation system comprising boxes (1, 4, 37, 38, 39) arranged in lines for receiving appliances such switches, sockets and the like, comprising a number of conductors spaced apart from one another at the base of the boxes (1, 4, 37, 38, 39) and having a number of plug-in contacts (54-57) spaced apart their length, the conductors being embedded in a block of insulating materials, and the cores of a power line and/or wired conductors extending through a passage of at least one of the end boxes (1, 4, 37, 38, 39) of the system, and contacts adjacent the successive boxes (1, 4, 37, 38, 39) are available, through connections guided through passages in the box walls, for aligned conductors in successive boxes and the remaining contacts are available for connecting appliances and branch conductors, characterised in that in the lower region of the box (4, 37, 38, 39) at least one holder (5) is available for a fixed-position interchangeable plug block (3) or printed conductor portion (40) having a number of connection facilities per terminal and the connections at least for the aligned conductors for attaching to the power line in successive boxes are embedded in bridges extending through the walls of successive boxes, from which plugs extending in the direction towards the conductors project at the end into the end contacts of the conductors, starting from the connections.

2. An electric installation system according to claim 1, characterised in that the connections between the individual boxes (1, 4, 37, 38, 39) are prefabricated combination bridges (2).

3. An electric installation system according to claims 1 and 2, characterised in that the connections (27) embedded in the combination bridges (2) are conductors having bent ends which project from the combination bridge (2) and form the plugs (21, 22, 23, 24, 25, 26, 30, 31. 32, 33, 34, 35).

4. An electric installation system according to claims 1 to 3. characterised in that the plug block (3) is equipped with three printed conductors (27) electrically insulated from one another and extending parallel and having connection facilities via a plug connection.

5. An electric installation system according to claims 1 to 4, characterised in that the cover (6) of the plug block (3) has at least three inlets (7) for each conductor.

6. An electric installation system according to any of the preceding claims, characterised in that the plug block (3) in the box (1, 4, 37, 38, 39) can be positioned in at least one fixed place.

7. An electric installation system according to any of the preceding claims, characterised in that two plug blocks (3) or printed conductor portions (40) are interconnected via terminal bars (16, 45).

8. An electric installation system according to claim 1, characterised in that the plugblock (3) or the printed conductor portion (40) is equipped with more than three printed circuits (27) which are electrically insulated from one another and extend in parallel.

9. An electric installation system according to claim 1 or 8, characterised in that a combination bridge (44) with a connection arrangement leaving open the conductors adjacent conductors adjacent the power line.

10. An electric installation system according to claim 9, characterised in that a second terminal bar (45), extending across the conductors in a box (1, 4, 37, 38, 39), and with embedded contact bridges (30, 31, 32, 33, 34, 35) for short-circuiting the conductors (37, 38, 39) at the power line with the adjacent unused conductors.

11. An electric installation system according to claim 10, characterised in that the terminal bar (45) has set breaking points in the form of notches (47).

12. An electric installation system according to one or more of the preceding claims, characterised in that the box is used as a junction box without connections for appliances.

## Revendications

1. Système d'installation électrique, constitué de boîtes d'installation (1, 4, 37, 38, 39) susceptibles d'être alignées, destinées à recevoir des appareils d'installation, tels que commutateurs, prises de courant et appareils analogues, avec une pluralité de conducteurs s'étendant les uns à côté des autres au fond des boîtes d'installation (1, 4, 37, 38, 39) et comportant sur leur longeur une pluralité de contacts à fiche (54-57) à intervalle les uns des autres, ces conducteurs étant enrobés dans un bloc en matière isolante, tandis qu'aux contacts côté entrée d'au moins une des boîtes d'installation (1, 4, 37, 38, 39) côté terminal du système, s'appliquent les conducteurs de la ligne d'alimentation et/ou de lignes branchées amenées par un passage dans la paroi de la boîte et aux contacts limitrophes des boîtes d'installation (1, 4, 37, 38, 39) successives s'appliquent des liaisons, amenées par des passages dans les parois des boîtes, pour des conducteurs alignés dans des boîtes d'installation successives (1, 4, 37, 38, 39), tandis que les contacts subsistants sont disponibles pour le raccordement des appareils d'installation et des lignes dérivées, système d'installation électrique caractérisé en ce que, dans la partie inférieure de la boîte d'installation (1, 4, 37, 38, 39), il est prévu au moins un logement (5) pour un bloc enfichable (3) interchangeable fixé en position, ou des tronçons de pistes conductives (40) avec plusieurs possibilités de raccordement pour chaque polarité, et les liaisons, tout au moins pour les conducteur alignés, devant être appliqués à la ligne d'alimentation, dans les boîtes d'installation successives, sont enrobées dans des ponts s'étendant à travers les parois des boîtes d'installation successives, ponts hors des extrémités desquels font saillie en direction des conducteurs des fiches partant des liaisons et s'insérant dans les contacts à fiche terminaux des conducteurs.

2. Système d'installation électrique selon la revendication 1, caractérisé en ce que les liaisons entre les différentes boîtes d'installation (1, 4, 37, 38, 39) sont des ponts de combinaison préfabriques (2).

3. Système d'installation électrique selon la revendication 1 et 2, caractérisé en ce que les liaisons (27) enrobés dans les ponts de combinaison (2) sont des conducteurs, dont les extrémités repliées, faisant saillie hors des ponts de combinaison (2), constituent les fiches (21, 22, 23, 24, 25, 26, 30, 31, 32, 33, 34, 35).

4. Système d'installation électrique selon l'une quelconque des revendications 1 à 3, caractérisé en ce que le bloc enfichage (3) est équipé de trois pistes conductives (27) isolées électriquement les une des autres, qui s'étendent parallèlement et qui ont des possibilités de raccordement par un connecteur à fiches.

5. Système d'installation électrique selon l'une quelconque des revendications 1 à 4, caractérisé en ce que le recouvrement (6) du bloc enfichable (3) comporte pour chaque conducteur au moins trois entrées de ligne (7).

6. Système d'installation électrique selon l'une quelconque des précédentes revendications, caractérisé en ce qu'il est prévu au moins un emplacement, fixe en position du bloc enfichable (3) dans la boîte d'installation (1, 4, 37, 38, 39).

7. Système d'installation électrique selon l'une quelconque des précédentes revendications, caractérisé en ce que deux blocs enfichables (3) ou des tronçons de pistes conductives (40) sont reliés ensemble par l'intermédiaire de barrettes de connexion (16, 45).

8. Système d'installation électrique selon la revendication 1, caractérisé en ce que le bloc enfichable (3) ou les tronçons de pistes conductives (40) comportent plus de trois pistes conductrices (27) isolées électriquement les unes des autres et qui s'étendent parallèlement.

9. Système d'installation électrique selon la revendication 1, caractérisé en ce qu'un pont de combinaison (44) comporte un agencement de liaison épargnant les conducteur contages aux conducteurs s'appliquant à la ligne d'alimentation.

10. Système d'installation électrique selon la revendication 9, caractérisé en ce qu'il est prévu une seconde barrette de connexion (45), traversant les conducteurs d'une boîte d'installation (1, 4, 37, 38, 39). et dans laquelle sont enrobés des étriers de contact (30, 31, 32, 33, 34, 35) pour court-circuiter les conducteurs (37, 38, 39), s'appliquant à la ligne d'alimentation, avec les conducteurs voisins non occupés.

11. Système d'installation électrique selon le revendication 10, caractérisé en ce que la barrette de connexion (45) est pourvue d'entailles (47) jouant le rôle de points de rupture.

12. Système d'installation électrique selon une ou plusieurs des revendications précédentes, caractérisé en ce que la boîte d'installation sans raccordement d'appareil est mise en place en tant que boîte de dérivation.
